Europäisches Patentamt

European Patent Office

Office européen des brevets

(11) Veröffentlichungsnummer: **0 310 705**
**A1**

(12) **EUROPÄISCHE PATENTANMELDUNG**

(21) Anmeldenummer: 87117027.0

(22) Anmeldetag: 19.11.87

(51) Int. Cl.⁴: **H04Q 7/04 , B61L 3/12**

(30) Priorität: 09.10.87 DE 3734282
28.10.87 DE 3736446

(43) Veröffentlichungstag der Anmeldung:
**12.04.89 Patentblatt 89/15**

(84) Benannte Vertragsstaaten:
**AT BE CH DE ES FR GB IT LI LU NL SE**

(71) Anmelder: **AEG KABEL Aktiengesellschaft**
**Bonnenbroicher Strasse 2-14**
**D-4050 Mönchengladbach 2(DE)**

(72) Erfinder: **Stremme, Wolfgang, Dr.**
**Lindenstraat 13e**
**NL-6291 AE Vaals(NL)**
Erfinder: **Hildebrandt, Hans-Georg, Dr.**
**Neuenhaus 16**
**D-5600 Wuppertal(DE)**
Erfinder: **Briechle, Roland, Dr.-Ing.**
**Pappelauer Weg 8**
**D-7900 Ulm(DE)**
Erfinder: **Keinath, Hartmut, Dr.-Ing.**
**Brandenburgweg 81**
**D-7900 Ulm(DE)**

(74) Vertreter: **Langer, Karl-Heinz, Dipl.-Ing.**
**Licentia Patent-Verwaltungs-GmbH**
**Theodor-Stern-Kai 1**
**D-6000 Frankfurt/Main 70(DE)**

(54) **Funkübertragungssystem.**

(57) Bei einem Funkübertragungssystem für die Übertragung von Kommunikationsdiensten wie z. B. Sprach-, Text-, Bild- oder Fernmeßübertragung für den Einsatz bei fahrweggebundenen Verkehrsmitteln mit einer gerichteten Mikrowellenübertragung, ist vorgesehen, daß das System zumindest teilweise als dienstintegriertes System (ISDN) aufgebaut ist.

EP 0 310 705 A1

FIG.

## Funkübertragungssystem

Die Erfindung betrifft ein Funkübertragungssystem für die Übertragung von Kommunikationsdiensten wie z. B. Sprach-, Text-, Bild- oder Fernmeßübertragung für den Einsatz bei fahrweggebundenen Verkehrsmitteln mit einer gerichteten Mikrowellenübertragung.

Bei fahrweggebundenen Verkehrsmitteln wie z. B. der Bundesbahn besteht der Wunsch, daß Kommunikationsgeräte im Zug mit einer Zentrale Funkkontakt haben, damit Informationen zwischen den Kommunikationsgeräten im Zug und der Zentrale ausgetauscht werden können. Der Erfindung liegt die Aufgabe zugrunde, ein Funkübertragungssystem anzugeben, welches sich zum Informationsaustausch zwischen fahrweggebundenen Verkehrsmitteln und einer Zentrale eignet und welches den Informationsaustausch in einfacher Weise ermöglicht. Diese Aufgabe wird bei einem Funkübergungssystem der eingangs erwähnten Art nach der Erfindung durch das kennzeichnende Merkmal des Anspruchs 1 gelöst.

Die Erfindung wird im folgenden an einem Ausführungsbeispiel erläutert.

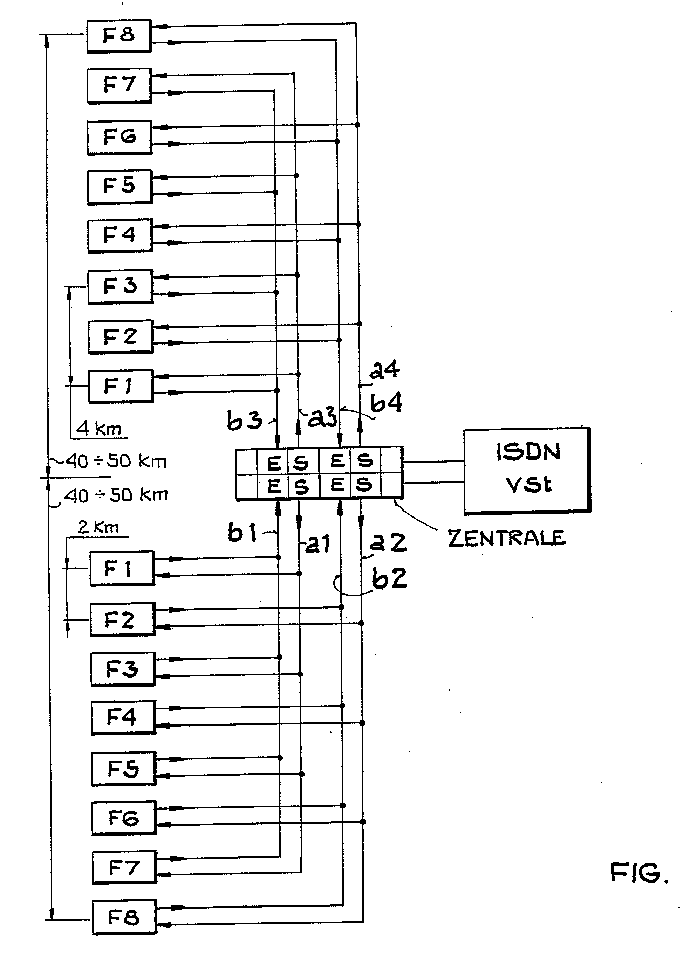

Die Figur zeigt ein Funkübertragungssystem nach der Erfindung anhand eines Streckenabschnittes, der im Ausführungsbeispiel 80 bis 100 km beträgt. Bei dem dargegestellten Streckenabschnitt kann es sich beispielsweise um einen Streckenabschnitt der Bundesbahn handeln.

In der Mitte des in der Figur dargestellten Streckenabschnittes befindet sich eine Zentrale, die mit einer ISDN-Vermittlungsstelle verbunden ist. In der Zentrale befinden sich optische Sender (S) und optische Empfänger (E).

Die optischen Sender der Zentrale liefern über optische Lichtwellenleiter ($a_1$ bis $a_4$) Informationen an optische Empfänger in den einzelnen Funkstationen (F1 ... F8) der Funkfelder. Die Funkfelder mit ihren Funkstationen sind beispielsweise im Abstand von 2 km auf die Strecke verteilt. Die in relativ geringem Abstand voneinander angeordneten Funkstationen sind deshalb erforderlich, weil es sich um Richtfunksysteme handelt, die nur einen relativ kurzen Streckenabschnitt von beispielsweise 2 km überdekken können. Zwar könnte man Richtfunksysteme größerer Reichweite verwenden, jedoch muß man in der Lage sein, auch gekrümmte Streckenabschnitte zu versorgen. Die Sender (S1' ... S8') der einzelnen Funkstationen übertragen ihre Informationen, die sie von der Zentrale erhalten, zu einem im fahrenden Zug befindlichen Empfänger. Die einzelnen Funkstationen haben außer den genannten Sendern S1' bis S8' Empfänger E1' bis E8', die die Aufgabe haben, die vom Sender des Zuges empfangene Information an die Zentrale mittels optischer Lichtwellenleiter (b1 bis b4) weiterzuleiten. In den einzelnen Hälften des in der Figur dargestellten Streckenabschnittes (80 bis 100 km) sind die optischen Sender nicht sämtlich an das gleiche optische Kabel angeschlossen, damit das Funkübertragungssystem auch dann funktionsfähig bleibt, wenn beispielsweise einer der vorhandenen optischen Lichtwellenleiter ausfällt. In diesem Fall könnten die optischen Sender statt der erforderlichen 2 km notfalls auch 4 km überbrücken. Um diesem Sachverhalt Rechnung zu tragen, ist im Ausführungsbeispiel jeweils jede zweite Funkstation mit ihren Sendern und Empfängern an einen anderen Lichtwellenleiter angeschlossen wie die jeweils dazwischen liegende Funkstation. So sind beispielsweise im Ausführungsbeispiel die Funkstationen F1, F3, F5 und F7 (der linken Streckenhälfte) mit ihren Sendern und Empfängern an die Lichtwellenleiter a1 bzw. b1 angeschlossen, während die dazwischen liegenden Funkstationen F2, F4 und F6 sowie F8 mit ihren Sendern und Empfängern an die Lichtwellenleiter a2 bzw. b2 angeschlossen sind. Entsprechend sind der rechten Streckenhälfte die Funkstationen F1', F3', F5' und F7' an die Lichtwellenleiter a3 bzw. b3 angeschlossen, während die dazwischen liegenden Funkstationen F2', F4' und F6' sowie F8' an die Lichtwellenleiter a4 bzw. b4 angeschlossen sind. Wenn beispielsweise der Lichtwellenleiter a1 ausfällt, so funktioniert aufgrund der gewählten Anschlußweise trotzdem immer noch das Funkübertragungssystem, da in diesem Fall zwar die Sender der Funkstationen F1, F3, F5 und F7 keine Informationen von der Zentrale erhalten, jedoch die Sender der Funkstationen F2, F4, F6 und F8, und zwar über den nicht ausgefallenen Lichtwellenleiter a2. Entsprechendes gilt natürlich auch für über die Lichtwellenleiter b1, b2, b3 bzw. b4 an die Empfänger (E) der Zentrale angeschlossenen Empfänger der Funkstationen.

Die Empfänger der einzelnen Funkstationen erhalten vom Sender des Zuges Informationen, und zwar jeweils dann, wenn der Zug das jeweilige Funkfeld des Empfängers erreicht. Die Empfänger der Funkstationen geben die vom Zug erhaltene Information (über die Lichtwellenleiter b1 bis b4) jeweils an die Zentrale weiter.

Die optische Sendeinformation der Zentrale wird mittels von in der Figur nicht dargestellten optischen Kopplern an die optischen Empfänger der einzelnen Funkstationen ausgekoppelt. Umgekehrt werden die von den optischen Sendern der einzelnen Funkstationen abgegebenen optischen Signale über passive optische Koppler in die Lichtwellenleiter (b1 bis b4) eingekoppelt.

Gemäß einer Ausführungsform der Erfindung ist der Kopplungsgrad der einzelnen optischen Koppler unterschiedlich gewählt, und zwar derart, daß alle Empfänger der Funkstation möglichst die gleiche optische Leistung erhalten.

Ohne eine entsprechende Anpassung der einzelnen Kopplungsfaktoren wäre dies nicht der Fall, da die der Zentrale benachbarten Empfänger eine wesentlich größere optische Leistung erhalten würden als die weiter von der Zentrale entfernten Empfänger. Entsprechendes gilt für die optischen Sender der Funkstationen. Ebenso wie die Empfänger sind auch die Sender unterschiedlich an die Lichtwellenleiter (b1 bis b4) angekoppelt, um zu gewährleisten, daß jeder Sender der Funkstationen möglichst die gleiche Leistung an die Zentrale abgibt.

Die im Ausführungsbeispiel vorhandene Zentrale ist an das dienstintegrierte Datennetz ISDN angeschlossen. Die im beschriebenen System übertragene Daten- und Sprachkommunikation ist entsprechend dem Systemkonzept und Kanalschema des dienstintegrierenden Fernmeldenetzes (ISDN) aufgebaut. Unter diesen Umständen besteht die Möglichkeit, gemäß dem Ausführungsbeispiel die Zentrale unmittelbar an das ISDN-Fernmeldenetz anzuschließen.

In herkömmlichen Übertragungsnetzen (z. B. Telefonnetz, Telexnetz oder Datennetz) sind getrennte Netze für analoge und digitale Dienste vorhanden. Im Gegensatz dazu werden im ISDN-System in bekannter Weise ausschließlich digitale Informationen verwendet. Dementsprechend werden im ISDN-System alle Dienste (wie z. B. Telefon, Text, Bild sowie Daten) in einem einzigen gemeinsamen Netz übertragen.

**Ansprüche**

1. Funkübertragungssystem für die Übertragung von Kommunikationsdiensten wie z. B. Sprach-, Text-, Bild- oder Fernmeßübertragung für den Einsatz bei fahrweggebundenen Verkehrsmitteln mit einer gerichteten Mikrowellenübertragung, dadurch gekennzeichnet, daß das System zumindest teilweise als dienstintegriertes System (ISDN) aufgebaut ist.

2. Funkübertragungssystem nach Anspruch 1, dadurch gekennzeichnet, daß der Fahrweg in Streckenabschnitte aufgeteilt ist, daß jeder Streckenabschnitt eine Zentrale aufweist und daß jede Zentrale an das ISDN-Netz angeschlossen ist.

3. Funkübertragungssystem nach Anspruch 1 oder 2, dadurch gekennzeichnet, daß Informationen, die über das Bestehen von Funkverbindungen Auskunft geben, über den D-Kanal des ISDN-Netzes zum jeweils nächsten Fahrabschnitt übergeleitet werden.

4. Funkübertragungssystem nach einem der Ansprüche 1 bis 3, dadurch gekennzeichnet, daß ein Streckenabschnitt in mehrere Funkfelder mit je einer Sende- und Empfangsstation aufgeteilt ist und daß die Sende- und Empfangsstationen der einzelnen Funkfelder untereinander sowie mit der Zentrale verbunden sind.

5. Funkübertragungssystem nach einem der Ansprüche 1 bis 4, dadurch gekennzeichnet, daß die Sende- und Empfangsstationen untereinander sowie mit der Zentrale über Lichtwellenleiter verbunden sind.

6. Funkübertragungssystem nach einem der Ansprüche 1 bis 5, dadurch gekennzeichnet, daß die optische Sendeinformation der Zentrale mittels eines optischen Lichtwellen leiters an die Sender der Funkfelder weitergeleitet wird und aus dem optischen Lichtwellenleiter mittels passiver optischer Koppler ausgekoppelt wird.

7. Funkübertragungssystem nach einem der Ansprüche 1 bis 6, dadurch gekennzeichnet, daß die von den Empfängern der Funkfelder empfangene Information mittels optischer Koppler in eine optische Lichtleitfaser eingekoppelt wird, welche mit der Zentrale verbunden ist.

8. Funkübertragunssystem nach einem der Ansprüche 1 bis 7, dadurch gekennzeichnet, daß jeweils nur derjenige optische Sender der Funkfelder eingeschaltet wird, in dessen Streckenabschnitt sich das Verkehrsmittel befindet.

9. Funkübertragungssystem nach einem der Ansprüche 1 bis 8, dadurch gekennzeichnet, daß eine Staffelung der Informationsübertragung zwischen einzelnen Funkstationen und der Zentrale vorliegt (Multiplexübertragung), damit von mehreren Funkstationen empfangene Funksignale über denselben Lichtwellenleiter übertragen werden können.

10. Funkübertragungssystem nach einem der Ansprüche 1 bis 9, dadurch gekennzeichnet, daß für die Zuführung der Information zu den Sendestationen der Funkfelder und für die Übertragung der Information von den Empfangstationen der Funkfelder zur Zentrale gesonderte Lichtwellenleiter vorgesehen sind.

11. Funkübertragungssystem nach einem der Ansprüche 1 bis 10, dadurch gekennzeichnet, daß die optischen Koppler zumindest teilweise einen unterschiedlichen Koppelfaktor aufweisen.

12. Funkübertragungssystem nach Anspruch 11, dadurch gekennzeichnet, daß der Kopplungsgrad der optischen Koppler im Sendesystem mit zunehmendem Abstand der optischen Koppler von der Zentrale zunimmt und im Empfangssystem mit zunehmendem Abstand der optischen Koppler von der Zentrale ebenfalls zunimmt.

13. Funkübertragungssystem nach einem der Ansprüche 1 bis 12, dadurch gekennzeichnet, daß ein Teil der den Funkfeldern eines Streckenabschnittes zugeordneten Funkstationen über ein erstes optisches Leiterpaar und der andere Teil dieser Funkstation über ein zweites optisches Leiterpaar mit der Zentrale verbunden ist.

14. Funkübertragungssystem nach Anspruch 13, dadurch gekennzeichnet, daß unmittelbar benachbarte Funkstationen nicht mit demselben optischen Leiterpaar verbunden sind.

15. Funkübertragungssystem nach einem der Ansprüche 1 bis 14, dadurch gekennzeichnet, daß sich die Zentrale in der Mitte eines Streckenabschnittes befindet.

FIG.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 366 751 (SIEMENS AG) * Seite 2, Zeile 28 - Seite 4, Zeile 12; Seite 5, Zeile 10 - Seite 7, Zeile 21 * | 1 | H 04 Q 7/04 B 61 L 3/12 |
| A | | 2,4,5,9,10,15 | |
| Y | EP-A-0 217 309 (AT & T) * Spalte 1, Zeilen 4-14; Spalte 4, Zeile 1 - Spalte 5, Zeile 16; Anspruch 1 * | 1 | |
| A | | 2,3 | |
| A | COMPUTER NETWORKS, Band 8, Nr. 5/6, Oktober-Dezember 1984, Seiten 393-412, Elsevier Science Publishers B.V., Amsterdam, NL; N. INOUE: "New technologies for the information network system" * Seite 393, Absatz 2 - Seite 395, Absatz 3; Seite 398, Absatz 4.2 - Seite 402, Absatz 5.4 * | 1-3 | |
| A | DE-A-3 135 231 (S.E.L.) * Seite 5, Zeile 18 - Seite 7, Zeile 8; Seite 8, Zeile 1 - Seite 9, Zeile 20 * | 1,2,4,5,7,9,13,15 | RECHERCHIERTE SACHGEBIETE (Int. Cl.4) H 04 Q H 04 B B 61 L G 08 G |
| A | EP-A-0 082 037 (S.A.T.) * Seite 5, Zeilen 3-31; Seite 14, Zeilen 15-34 * | 1,4-7,9,10,13,14 | |
| A | EP-A-0 043 572 (LICENTIA) * Seite 2, Zeile 12 - Seite 3, Zeile 6 * | 1,4,8 | |

-/-

Der vorliegende Recherchenbericht wurde für alle Patentansprüche erstellt

| Recherchenort | Abschlußdatum der Recherche | Prüfer |
|---|---|---|
| DEN HAAG | 13-07-1988 | GERLING J.C.J. |

| | **Europäisches Patentamt** | **EUROPÄISCHER RECHERCHENBERICHT** | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 234 804 (AT & T) <br> * Seite 2, Zeile 17 - Seite 3, Zeile 3; Seite 8, Zeile 15 - Seite 8, Zeile 35 * <br> ----- | 5-7,9-12 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 13-07-1988 | GERLING J.C.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)